# EUROPEAN PATENT APPLICATION

(11) **EP 2 123 433 A1**
(43) Date of publication of application: **25.11.2009**
(21) Application number: 08156864.4
(22) Date of filing: 23.05.2008
(51) Int. Cl.: B29D 11/00, G02B 3/00, G02B 5/128

(54) **Micro-optical assembly**

(71) Applicant: National University of Ireland Galway, Galway (IE)
(72) Inventor: Sherlock, Richard, Galway (IE); O'Connell, Claire, Knocknacarra Galway (IE)
(74) Representative: Catesby, Olivia Joanne

(57) **Abstract**

The present invention relates to a method of manufacturing a micro-optical assembly. The method comprising the steps of: depositing silica microspheres on a first wettable substrate; coating a second substrate with an adhesive material to form an adhesive layer; combining the first and second substrates such that the spheres are partially coated by the adhesive layer; curing the adhesive layer; and removing the first substrate from the second substrate so that an micro-optical assembly is formed by the second substrate having thereon an adherent assembly of microspheres.

## Description

### Background to the Invention

Microlens or micro-optical technology is widely used in a number of different industrial applications. These include fluorescence analyses, sensors, optical communications, laser surface modification, laser marking and coding applications, laser perforation, and laser drilling.

Micro-optical assemblies can be manufactured using a number of techniques. Once commonly used fabrication technique for micro-optical assemblies involves machining bulk optical substrates with elements which are greater than 100 micrometres, and which can be any value up to a few millimetres in size.

Another fabrication technique for micro-optical assemblies is described in US Patent No. 7,057,832. This Patent describes a micro-optical array which can be used to form an image on a substrate surface. The micro-optical array is formed by the use of a spherically-shaped polystyrene micro-optical component embedded in a polydimethylsiloxane (PDMS) support element.

One disadvantage of the resulting micro-optical component relates to the fact that when used in laser applications, it is found that the transmission is not optimum below wavelengths of 300 nanometres. In fact, it is found that the polystyrene will not transmit light at a wavelength below 266 nanometres.

Accordingly, the microlens array is not very suited to some applications, such as laser marking, which often require the use of ultraviolet lasers or lamps at shorter wavelengths than 266 nanometres.

It is therefore an object of the present invention to develop an alternative micro-optical assembly which can be used in a variety of industrial applications.

### Summary of the Invention

The present invention provides a method of manufacturing a micro-optical assembly comprising the following steps:
depositing silica microspheres on a first wettable substrate;
coating a second substrate with an adhesive material to form an adhesive layer; combining the first and second substrates such that the spheres are partially coated by the adhesive layer;
curing the adhesive layer; and
removing the first substrate from the second substrate so that an micro-optical assembly is formed by the second substrate having thereon an adherent assembly of microspheres.

The characteristics of the resulting fabricated micro optical assembly make it suitable for use in a variety of industrial applications, such as laser marking technology, laser shot peening, medical applications, wavefront sensors, SiMOS systems and optical communication systems. These characteristics include the fact that the optical assembly can withstand the intensities used in laser material processing, and need not be disposed of after a single usage.

Preferably, the step of depositing silica microspheres on a first wettable substrate comprises the following steps:
providing a first wettable substrate; and
depositing the silica microspheres in a liquid suspension onto the first substrate by a self-assembly process.

Where the first substrate is glass, the step of providing a first wettable substrate may comprise:
coating the glass substrate with functionalising agent;
allowing the functionalising agent to react with the glass substrate for an extended time period;
   and heating the reacted combination of functionalising agent and glass substrate.

Where the first substrate is a surface modified polymer, the step of providing the first wettable substrate may comprise:
cleaning the polymer substrate in an ultrasonic bath; and
exposing the surface of the polymer substrate to ultraviolet light.

The self-assembly process may comprise gravitational sedimentation or vertical deposition.

The gravitational sedimentation process may comprise:
depositing the microsphere suspension onto the substrate using a micropipette, and
slowly evaporating the aqueous suspension in a controlled humidity environment, and the vertical deposition process may comprise:
   placing the substrate vertically in a vial containing the suspension of microspheres so that the meniscus is slowly swept across the substrate by solvent evaporation so as to form a monolayer.

The step of coating a second substrate with an adhesive material to form an adhesive layer may be provided by spin coating, preferably a 2-stage spin process.

The step of coating a second substrate with an adhesive material to form an adhesive layer may comprise selective deposition of an adhesive material at locations on the second substrate where it is desired to adhere a microsphere.

Preferably, the selective deposition is provided by programmable means.

The adhesive material may comprise Cy-52-276 silicone gel or TEOS.

The present invention also provides a micro-optical assembly formed by the method.

The present invention also provides the use of the micro-optical assembly in a laser marking apparatus or a laser shot peening apparatus or a Shack-Hartmann wavefront sensor.

The present invention also provides an apparatus for producing perforations in a membrane comprising the micro-optical assembly.

The present invention also provides a self-aligned microfluidic optical system (SiMOS) comprising the micro-optical assembly.

The present invention also provides an optical communication system comprising the micro-optical assembly.

### Brief Description of the Drawings

Figure 1 shows a graphical illustration of the main steps involved in the fabrication of the micro-optical assembly of the present invention.
Figure 2 shows a typical process flow for the fabrication of the micro-optical assembly of the present invention; and
Figure 3 shows the application of the micro-optical assembly in laser processing of materials.

### Detailed Description of the Drawings

The present invention will now be described with reference to an exemplary embodiment shown in the accompanying drawings.

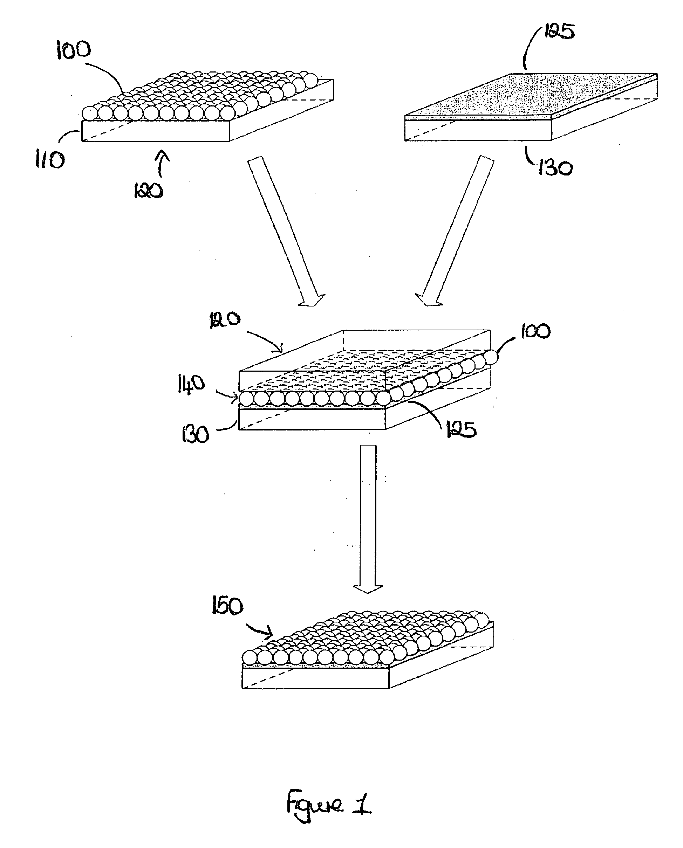

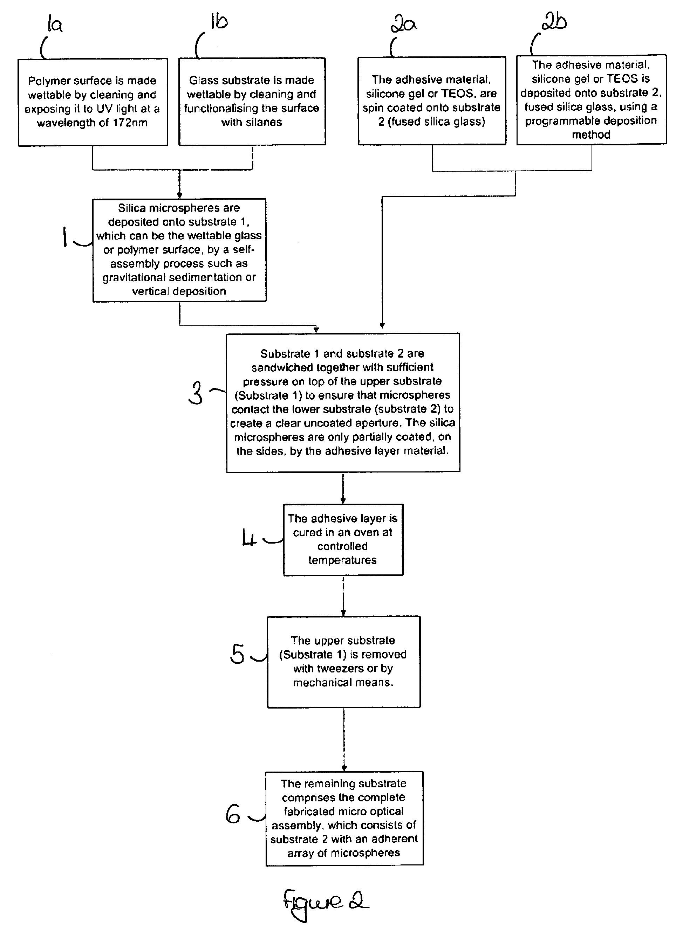

Referring now to Figures 1 and 2, in step 1 of the process flow for fabrication of the micro-optical assembly of the present invention, silica microspheres 100 with an approximate refractive index value n_{silica spheres} =1.37 are deposited onto a wettable substrate 110. The substrate 110 may take the form of a clean glass surface, or of a surface modified polymer, for example, a polyimide substrate such as Kapton^{™}.

The process of depositing the silica microspheres onto the wettable substrate requires a number of preparatory steps. Firstly, the fused silica substrates are cleaned using piranic acid (75% sulphuric acid and 25% hydrogen peroxide), rinsed with distilled water and dried before use. In the described embodiment, these silica microspheres are 0.5 - 10 micrometres in diameter.

Where a glass substrate is used, the glass substrate must then be coated with allyltrimethoxysilane, in order to functionalise the surface (step 1a). It will be appreciated that the amount of agent required depends on the area that needs to be treated. A single molecule will typically cover a surface area of approximately 0.5nm². The functionalising agent is left to react with the glass substrate for an extended period, such as overnight. It is then held around 80°C for approximately 1 hour, to promote covalent bonding of the organosilane to the surface.

When Kapton^{™} is used as the wettable substrate, the Kapton^{™} polyimide surface is made wettable by cleaning it with 100 % ethanol in an ultrasonic bath for approximately 15 minutes, and then exposing it to UV light at a wavelength of 172nm (step 1b). This can be carried out by an excimer lamp operating at 21 mW/cm².

It will be appreciated that another substrate could be used other than Kapton^{™} or glass, and the surface of the substrate could be modified by any suitable technique, such as plasma processing, corona treatment, flame treatment, chemical etching or surface grafting, and be rendered wettable by methods similar to those described above or otherwise.
The silica microspheres, contained in an aqueous suspension, are then deposited, onto the wettable substrate, by a self-assembly process. This can be either gravitational sedimentation or vertical deposition.

In preferred embodiments of the gravitational sedimentation process, a film-forming composition comprising at least a film-forming agent and a solvent, and optionally other chemical species selected from enamels, resins, plasticizing agents, polymerisation promoters, gelling agents, and cross-linking agents is first formed. In one example, a commercially available nail varnish (Rimmel) proved to be a practical film-forming agent for this purpose. This composition is used to produce a thin retaining boundary film wall, such as for example of length and width 1 cm x 1 cm, on the substrate, to contain the microspheres, so as to form a microsphere suspension. This prevents the spreading of the aqueous suspension of spheres during the evaporation process. The volume of silica microsphere suspension required to produce a monolayer of hexagonally close packed microspheres over a 1 cm x 1 cm area can be calculated using well-known formulae, and need not be elaborated in further detail here. The sphere suspension is deposited onto the substrate (110) using a micropipette, and the monolayers of microsphere arrays are then formed by slow evaporation of the diluted aqueous suspension in a controlled humidity environment (120). The suspension of the microspheres in liquid ensures that a good spreading of the microspheres can be achieved.

In the vertical deposition (or dip-coating) process, strong capillary forces at a meniscus between the substrate and the microsphere suspension can induce ordering of the microspheres into a hexagonally closed packed array. This is achieved by placing the wettable substrate vertically in a vial containing a suspension of silica spheres. When the meniscus is slowly swept across a vertically placed substrate by solvent evaporation, a monolayer is formed. Once the fluid is evaporated, these spheres self-assemble into a monolayer (120).

In step 2a, an adhesive material such as CY-52-276 silicone gel or Tetraethylorthosilicate (TEOS, SiO₂ precursor), or another suitable adhesive material, is chosen. The refractive indices of the silicone gel, TEOS or other adhesive are approximately equal to or greater than the refractive index of the silica spheres, being approximately in the range 1.38 - 1.5 (n_{silicone gel}= 1.4; n_{TEOS} = 1.38). The silicone gel, TEOS or other adhesive material is spin coated so as to form an adhesive layer (125) on a second fused silica substrate (130). This is performed to produce a thin layer of either approximately 5 micrometres of silicone gel or approximately 1.7 micrometres of TEOS. In any case the adhesive layer thickness will be less than the diameter of the silica spheres being used. The spin coating is carried out at specific spin times and speeds.

The spin coating is performed using a spin coater which uses a 2-stage spin process. The fused silica is placed on the central vacuum holder and approximately 120 µl of TEOS or approximately 200 µl of PDMS is deposited onto the fused silica surface.

The 2-stage process allows dispensing of the solution at low speeds, and homogenising of the coating at higher speeds. The parameter that is typically used for dispensing of both solutions is a spin speed of 800rpm for 6 seconds. The parameters used for homogenising of silicone gel and TEOS on the fused silica surface are typically a spin speed of 8000 rpm for 60 seconds and a spin speed of 3000 rpm for 30 seconds respectively. In the described embodiment, the spin coater is a Chemat Technology Model KW-4A.

In another embodiment of the invention, this step may be replaced by the step of selective deposition of the adhesive material at locations of the substrate where it is desired to adhere a microsphere (step 2b). A programmable means of deposition, such as for example ink-jet deposition, may be used to achieve this. In this embodiment of the invention, the microlens may be deposited in a programmable pattern, which may embody a code.

In step 3 of the process flow, the substrates (120) and (130) produced from step 1 and step 2 are sandwiched together, such that the spheres (100) and adhesive (125) are in contact (140). Sufficient pressure is placed on top of the upper substrate (120) containing the spheres (100) to ensure that the spheres (100) contact the lower substrate. It should be noted that, because the diameter of the spheres is larger than the thickness of the adhesion layer, the silica microspheres (100) are only partially coated by the adhesion layer material. It will be appreciated that if the spheres (100) were fully coated by the adhesive, the resulting micro-optical assembly formed by the process would not enable the spheres to focus the incoming light, and would instead cause any incident illumination to diverge. This is due to the fact that the spheres would have a refractive index smaller than that of their fully surrounding adhesive medium (n_{silica spheres} = 1.37; n_{TEOS} = 1.38 and n_{silicone gel}= 1.4).

The adhesive layer (125) is then cured (step 4). This is achieved by curing the silicone gel or the TEOS in a Memment laboratory oven at 70°C for approximately 30 minutes and at 80°C for 6 hours respectively.

In step 5 of the process flow, the upper substrate (120) is then removed from contact with the lower substrate (130). This can be performed by any suitable means. In one embodiment of the invention, this is performed by manual means, such as by the use of a tweezers. In another embodiment of the invention, an automated mechanical means may be used to remove the upper substrate. At this point, the remaining substrate (130) comprises the completed fabricated micro optical assembly (150), which consists of the second substrate (130) with an adherent array of microspheres (100) (step 6).

It will be appreciated that the resulting micro-optical assembly consists of a plurality of microlenses. In some embodiments, this can comprise a selectively deposited assembly of microlenses in a pattern determined by the programmable deposition of the adhesive layer. In other embodiments however, the micro optical assembly can exhibit partial, short range, or long-range ordered packing of the microelenses, so as to form of an array of a plurality of microlenses. This array can comprise for example of a hexagonally close packed configuration. Other embodiments may comprise square packing configuration. The area of the micro-optical assembly is typically 1cm x 1cm.

The characteristics of the resulting fabricated micro optical assembly make it suitable for use in a variety of industrial applications. These include the fact that the optical assembly can withstand the intensities used in laser material processing, and need not be disposed of after a single usage.

Another advantage of the design of the optical assembly of the present invention is that the micro spheres are in contact with, or close to, the surface of the workpiece when in use in, for example, laser machining or marking applications, rather than being positioned essentially equal to the image distance of the optical component, as is the case with a number of prior art arrangements. When working at distances less than the image distance of the optical component in laser machining or marking applications a larger fraction of the underlying surface is exposed to laser radiation.

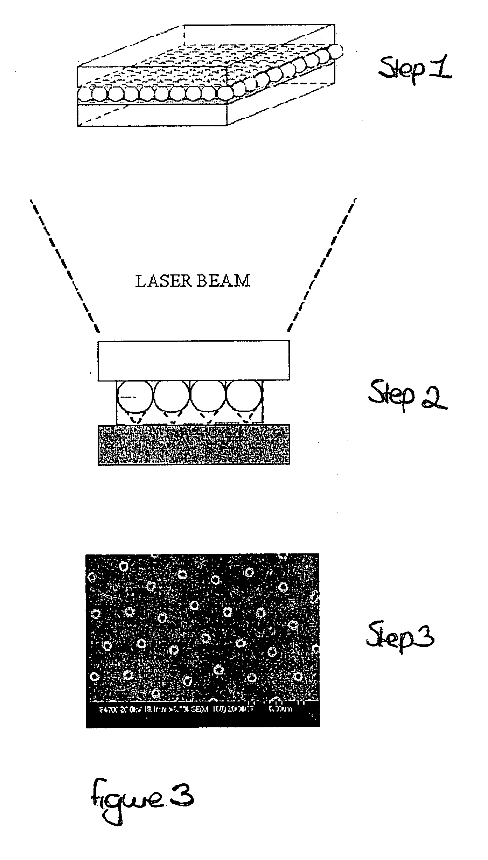

One application in which the microsphere optical assembly of the present invention is suitable for use is in laser marking technology. In this application, the microsphere optical assembly can be used with a laser of sufficient intensity and suitable wavelength to create an imprint of a 2D pattern to form an authentication code on a product or workpiece material, which is invisible to the naked eye. The pattern can be either an ordered or a random pattern, depending on the user requirements. This application can be understood better with reference to Figure 3. As is shown from the figure, the micro-optical assembly is placed directly onto the product or material that needs to be marked (step 1). It is then exposed to UV laser light (step 2). On exposure to the UV light, the microspheres, which are the main components of the micro optical assembly, act as microlenses, and refract the UV light onto the surface of the material to produce the 2-D pattern (step 3). Accordingly, it results in a permanent imprint of a specific mark, which can not be altered without showing evidence of tampering. The provision of a laser data code formed by this technique allow manufacturers and retailers to remove from their inventories any products which are found to lack the necessary identification codes, which could occur for example if their produce were to be copied. The micro-optical assembly can therefore be used for marking for example in treasury, pharmaceutical, medical devices and microelectronics fields. The use of the optical assembly of the present invention in contact with or very close to the surface as described above has the advantage that individual marks will be easier to identify and read.

The imprint produced by this technique could be a patterned modification of the colour or monochromatic tone of a region of the surface, a patterned discolouration of the surface, or a patterned physical modification of the surface. Alternatively, the imprint could be a modification of the surface texture, such that the light scattering from the modified region is itself modified, or a patterned modification of the surface texture, such that the pattern produced diffracts light in a characteristic manner.

This technique could be used for example to form a diffractive optic element which, under suitable visible or invisible illumination, reconstructs a computer-generated hologram pattern. Alternatively, it could reconstruct a plurality of surface pits in a pattern, or a plurality of perforations of a surface layer, coating, film or membrane, or a plurality of holes in a material or workpiece. It will be appreciated that in some applications of the invention, more than one type of mark could be formed by the pattern of the micro-optical assembly.

It will be appreciated that the modification of the material by the micro-optical assembly being exposed to the laser light may be visible, or invisible under optical spectrum illumination, or may be too small in total area or too fine in pattern resolution to be observable with the unaided human eye. The modification may also require advanced optical measurement techniques, including but not limited to electron microscopy, diffraction pattern measurements and colour-specific illumination and/or detection, microscopy, photon-counting, machine-vision or invisible illumination to be observed or detected, or for the information encoded on the material to be detected or decoded or otherwise read out.

The micro-optical assembly of the present invention can also be used in laser shot peening, if the laser has sufficient intensity.

The micro-optical assembly of the present invention can also be used to produce perforations in a thin membrane for drug delivery or osmostic devices. This has been applied to a biocapsule, for example. This can then be used for effective immunoisolation of transplanted islet cells for treatment of diabetes. These membranes are designed to allow the permeability of glucose, insulin and other metabolically active products, while at the same time, preventing the passage of cytotoxic cells, macrophages, antibodies and complement.

The formation of a plurality of perforations in a membrane by using the micro-optical assembly of this invention may be controlled by means of a suitable choice of the laser intensity and wavelength to which the micro-optical assembly is to be exposed, and by a suitable choice of the separation between the micro-optical assembly and the membrane, in order that the perforation mean size and standard deviation is such as to facilitate osmosis of one or more substances or species across the membrane, or to facilitate drug elution from a container, pill, capsule or structure.

The formation of a plurality of holes in a material of structure using the micro-optical assembly of the invention may also be applied to the formation of a hole pattern in a device used for fluid transfer, such as a catheter, canula, or hypodermic needle.

In another industrial application of the present invention, a Shack-Hartmann wavefront sensor, comprising a plurality of micro-lenses in an ordered assembly formed, by the process of the present invention, can be used in order to perform measurements of the distortion of an optical wavefront. Furthermore, it may be used as part of a larger adaptive optics system, for the purpose of performing corrections to the wavefront, based upon the information gathered using the said Shack-Hartmann wavefront sensor.

The microlens technology of the present invention in conjunction with self-aligned integrated microfluidic optical systems (SiMOS) can also be used for fluorescent analysis. The planar microlenses have the optical axis parallel to the plane. The excitation light of an LED for example is therefore condensed through the planar microspheres, and focused to the detection point in the microfluidic channel. The emitted fluorescence may be collected by a detector, which is on the microfluidic channel. Therefore, the whole optical path between excitation and detection consist of mutually orthogonal paths. The resulting fluorescent intensity is significantly amplified by the addition of these planar microlenses. It also offers the advantage of being cost-effective, rapid, of having increased fluorescence amplification and also minimises optical aberrations when compared to prior art techniques.

The microlens technology of the present invention can also be used in multiplexor/demultiplexor optical communications. As is well known, wavelength multiplexing and demultiplexing technologies enable transmission of an increased volume of information in the same optical fibre. By adding a microlens assembly to the end of these fibres, the relative bandwidth ratio is enhanced, and the light beams are directed directly to the diffraction grating. In order to have these beams illuminating a common area on the grating and then to reduce loss, each of the microlenses has to be offset relative to the core of the associated fibre. The amplitude of this offset depends on the position of the fibre, and it is possible using a microlens assembly having a pitch smaller than the pitch of the fibre ends.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method of manufacturing a micro-optical assembly comprising the following steps:
depositing silica microspheres on a first wettable substrate;
coating a second substrate with an adhesive material to form an adhesive layer; combining the first and second substrates such that the spheres are partially coated by the adhesive layer;
curing the adhesive layer; and
removing the first substrate from the second substrate so that an micro-optical assembly is formed by the second substrate having thereon an adherent assembly of microspheres.

2. The method of Claim 1 wherein the step of depositing silica microspheres on a first wettable substrate comprises the following steps:
providing a first wettable substrate; and
depositing the silica microspheres in a liquid suspension onto the first substrate by a self-assembly process.

3. The method of Claim 2, wherein the first substrate is glass, and the step of providing a first wettable substrate comprises:
coating the glass substrate with functionalising agent;
allowing the functionalising agent to react with the glass substrate for an extended time period;
and heating the reacted combination of functionalising agent and glass substrate.

4. The method of Claim 2, wherein the first substrate is a surface modified polymer, and the step of providing the first wettable substrate comprises:
cleaning the polymer substrate in an ultrasonic bath; and
exposing the surface of the polymer substrate to ultraviolet light.

5. The method of any of Claims 2 to 4, wherein the self-assembly process comprises gravitational sedimentation or vertical deposition.

6. The method of Claim 5, wherein the gravitational sedimentation process comprises:
depositing the microsphere suspension onto the substrate using a micropipette, and
slowly evaporating the aqueous suspension in a controlled humidity environment, and the vertical deposition process comprises:
placing the substrate vertically in a vial containing the suspension of microspheres so that the meniscus is slowly swept across the substrate by solvent evaporation so as to form a monolayer.

7. The method of any of the previous claims, wherein the step of coating a second substrate with an adhesive material to form an adhesive layer is provided by spin coating, preferably a 2-stage spin process.

8. The method of any of the previous claims, wherein the step of coating a second substrate with an adhesive material to form an adhesive layer comprises selective deposition of an adhesive material at locations on the second substrate where it is desired to adhere a microsphere.

9. The method of Claim 8, wherein the selective deposition is provided by programmable means.

10. The method of any of the previous claims, wherein the adhesive material comprises Cy-52-276 silicone gel or TEOS.

11. A micro-optical assembly formed by the method of any of Claims 1 to 10.

12. Use of the micro-optical assembly of Claim 11 in a laser marking apparatus or a laser shot peening apparatus or a Shack-Hartmann wavefront sensor.

13. An apparatus for producing perforations in a membrane comprising the micro-optical assembly of Claim 11.

14. A self-aligned microfluidic optical system (SiMOS) comprising the micro-optical assembly of Claim 11.

15. An optical communication system comprising the micro-optical assembly of Claim 11.
